# EUROPÄISCHE PATENTSCHRIFT

(11) **EP 2 284 707 B1**
(45) Veröffentlichungstag und Bekanntmachung des Hinweises auf die Patenterteilung: **23.09.2015**
(21) Anmeldenummer: 10450131.7
(22) Anmeldetag: 09.08.2010
(51) Int. Cl.: G06F 11/34

(54) **Verfahren und Vorrichtung zur Aufzeichnung der Benutzerinteraktion**
Method and device for recording user interactions
Procédé et dispositif destinés à l'enregistrement de l'interaction avec l'utilisateur

(30) Priorität: 07.08.2009 AT 12532009
(43) Veröffentlichungstag der Anmeldung: 16.02.2011
(73) Patentinhaber: Frequentis AG, 1100 Wien (AT)
(72) Erfinder: Bergner, Alexander, 3002 Purkersdorf (AT)
(74) Vertreter: Wildhack & Jellinek

(56) Entgegenhaltungen:
- EP-A2- 0 325 777
- US-A1- 2005 197 804

## Beschreibung

Die Erfindung betrifft ein Verfahren und eine Vorrichtung zur Aufzeichnung der Benutzerinteraktion gemäß dem Oberbegriff des Patentanspruchs 1 und 8.

Die Erfindung wird im Bereich sicherheitskritischer Systeme, beispielsweise bei Flugüberwachungssystemen oder Rettungszentralen, zur Überwachung und Dokumentation von Systemgebrechen, zum Beleg von menschlichem Versagen, zur Rekonstruktion der Benutzerinteraktion oder zum Training von Personen, eingesetzt.

Im Rahmen dieser Erfindung wird zwecks Allgemeinheit der Begriff "Maus" verwendet, der als Synonym für Zeigeeinheiten aller Art, beispielsweise auch für einen Trackball, ein elektronisches Zeichenbrett oder ein Touchpad, steht. In diesem Zusammenhang steht auch der Begriff Klick für eine Aktion des Benutzers an oder mit dieser Zeigeeinheit, welche eine Aktion beim angeschlossenen Gerät auslöst.

Die Bewegung der Zeigeeinheit wird üblicherweise durch einen Zeiger auf der Anzeigeeinheit dargestellt. Dieser Zeiger hat üblicherweise die Form eines Pfeils.

In sicherheitskritischen Anwendungen dürfen oftmals nur die Signale an außen zugänglichen Schnittstellen analysiert und aufgezeichnet werden. Durch Analyse der Signale an den Schnittstellen zwischen Zeigeeinheit und Computer, z. B. USB oder PS2 Schnittstellen, ist es nicht möglich, die Position des Zeigers zu rekonstruieren, da das Betriebssystem oder das aktive Programm die Bewegungsdaten der Zeigeeinheit auf unbekannte bzw. nicht vorhersagbare Weise interpretiert. Beispielsweise kann das Betriebssystem durch einen internen Fehler die einlangenden Daten der Zeigeeinheit unterdrücken bzw. nicht weiterverarbeiten. Eine nachträgliche Analyse der von der Zeigeeinheit ausgehenden Daten würde in diesem Fall nicht die korrekte Bewegung des Zeigers liefern.

Es ist mit herkömmlichen Vorrichtungen unmöglich, alleine anhand der von der Zeigeeinheit einlangenden Daten die Position des jeweiligen Zeigers zu rekonstruieren, insbesondere diejenige Position des Zeigers, an weicher der Knick erfolgte. Zur Rekonstruktion der vom Benutzer gesetzten Aktionen ist aber gerade dieser Aspekt der Bedienung unbedingt erforderlich.

Selbst die Aufzeichnung des Bildschirminhaltes samt Zeiger genügt nicht zur Rekonstruktion dieser Aktionen, wenn davon ausgegangen werden muss, dass der Bildschirminhalt nicht häufig genug aufgezeichnet wird, um die Aktionen nachverfolgen zu können. So kann es sein, dass nur ein Biid pro Sekunde aufgezeichnet wird und die Position des Zeigers beim Klick, der zwischen zwei aufgezeichneten Bildern erfolgt, nicht mit Sicherheit rekonstruiert werden kann.

Aus dem Stand der Technik ist die US-Patentanmeldung US 2005/197804 bekannt, die ein System und ein Verfahren zum kontinuierlichen Aufnehmen von Benutzerinteraktionen und dargestellten Bildern zeigt. Ein Recorder Box Servie nimmt kontinuierlich Videobilder von einem Videotreiber auf. Optional können Mauseingaben oder Tastatureingaben aufgezeichnet werden. Die aufgezeichnete Information wird in ein Footage-File geschrieben. Die Benutzerinteraktionen und die dargestellten Bilder können bei Benutzung des Footage-File erneut eingesehen oder dargestellt werden.

Aus der Europäischen Patentschrift EP 0325777 B1 ist ein System für den Zugriff auf eine Datei in einem Server-Verarbeitungssystem an einem Serverknoten C zur Verwendung durch ein Klienten-Verarbeitungssystem an einem Klientenknoten A, bekannt mit einem verteilten Prüfsubsystem zur Online-Überprüfung von Ereignissen in dem Klienten-Verarbeitungssystem und zur Online-Komprimierung eines Prüfpratokolls für diese Ereignisse In dem Server-Verarbeitungssystem, das folgende Bestandteile umfasst:
- einen Prüfdämonprozess 8A In dem Klienten-Verarbeitungssystem, der das Auftreten einer definierten Menge von Ereignissen in dem Klienten-Verarbeitungssystem überwacht und bei Auftreten dieser Ereignisse Prüfsätze vorbereitet;
- ein Mittel für verteilte Dienste 6A in dem Klienten-Verarbeitungssystem, mit dem ein im Server-Verarbeitungssystem gespeichertes Verzeichnis, das temporäre Ablagedateien 12A enthält, die dem Klienten-Verarbeitungssystem zugeordnet sind, mittels eines fernen virtuellen Mount-Vorgangs angehängt werden können. Hierbei ist vorgesehen, dass der Prüfdämonprozess in dem Klienten-Verarbeitungssystem die Prüfsätze in die temporären Ablagedatelen in dem fern angehängten Verzeichnis des Server-Verarbeitungssystems schreibt; wobei zu dem Prüfdämonprozess zusätzlich ein Mittel zur Datenkomprimierung gehört, das solche Ablagedateien mit Prüfsätzen verarbeitet und mit dem ausgewählte Ablagedateien komprimiert und die komprimierten Ablagedatelen In eine permanente Prüfprotokolldatei 14 in dem fern angehängten Verzeichnis des Server Verarbeitungssystems geschrieben werden.

Aufgabe der Erfindung ist es, eine Aufzeichnung von Bildschirminhalten gemeinsam mit Eingabe-Aktionen des Benutzers vorzunehmen, um eine spätere Rekonstruktion der Reaktion des Benutzers auf die Bildschirminhalte zu ermöglichen. Dies ist etwa bei sicherheitskritischen Anwendungen, beispielsweise im Bahn- oder Flugverkehr erforderlich, um genügend Beweismaterial zur Verfügung zu haben und dementsprechend Rückschlüsse auf menschliches Versagen oder Fehlverhalten treffen zu können.

Der vorliegenden Erfindung liegt weiters die Aufgabe zugrunde, die eingangs genannte Schwierigkeit der Rekonstruktion der Position des Zeigers beim Klick bei geringer Rate der Bildaufzeichnung zu überwinden und ein Verfahren bzw. eine Vorrichtung zur Verfügung zu stellen, die diesen Nachteil nicht aufweisen. Die Erfindung sollte einfach umzusetzen und praktikabel sein und zudem einen möglichst geringen Ressourcenaufwand erfordern. Zudem besteht bei sicherheitskritischen Anwendungen häufig die Anforderung, dass ein Programm, das die Erfindung umsetzt, verifiziert werden muss, wodurch der Anforderung nach Einfachheit der Erfindung zusätzliches Gewicht zukommt.

Die Erfindung löst diese Aufgabe mit den Verfahren gemäß den Ansprüchen 1 bis 4. Die Erfindung löst die Aufgabe mit den Vorrichtungen gemäß den Ansprüchen 5 bis 9 und der Datenträger und Computerprogramm gemäß den Ansprüchen 11 und 12.

Erfindungsgemäß wird ein Verfahren zur Aufzeichnung der Interaktion eines Benutzers mit einem Computersystem mit einer Zeigeeinheit und einer Anzeigeeinheit, vorgeschlagen. Dabei werden die beim Computersystem eingehenden Zeigesignale der Zeigeeinheit sowie die vom Computersystem erzeugten und der Anzeigeeinheit zugeführten Anzeigesignale gespeichert. Die Zeigesignale und die Anzeigesignale werden zu vorgegebenen, insbesondere periodisch, wiederkehrenden Zeitpunkten aufgenommen und abgespeichert. Erfindungsgemäß ist vorgesehen, dass bei Vorliegen eines Klicks das momentan an der Anzeigeeinheit anliegende Anzeigesignal aufgenommen wird. Das unmittelbar vor oder nach dem Klick aufgenommene Anzeigesignal wird verworfen und durch das momentan an der Anzeigeeinheit vorliegende Anzeigesignal ersetzt.

Erfindungsgemäß besteht der Vorteil, dass zum einen die Benutzerinteraktion besser aufgezeichnet werden kann und andererseits der zur Abspeicherung der Benutzennteraktion benötigte Speicherplatz gering gehalten werden kann. Ein Programm, das die Erfindung umsetzt, ist auch einfach zu verifizieren. Gängige Video-Codecs, die lediglich eine konstante Bildrate verarbeiten können, können mit dem erfindungsgemäßen Verfahren betrieben werden bzw. die mit der erfindungsgemäßen Vorrichtung erzeugten Bilddaten weiterverarbeiten.

Ein besonderer Aspekt der Erfindung sieht vor, dass bei Vorliegen eines Klicks das momentan an der Anzeigeeinheit vorliegende Anzeigesignal aufgenommen wird. Das dem Zeitpunkt des Klicks zeitlich nächstliegende aufgenommene oder aufzunehmende Anzeigesignal wird verworfen und durch das momentan an der Anzeigeeinheit vorliegende Anzeigesignal ersetzt. Hierdurch wird erreicht, dass eine regelmäßige Aufnahme der Bilder in möglichst gleichen Aufnahmeintervallen erzielt wird.

Ein weiterer Aspekt der Erfindung sieht vor, dass bei Vorliegen einer Anzahl von zumindest zwei Klicks zwischen zwei unmittelbar aufeinanderfolgenden Zeitpunkten der periodisch wiederkehrenden Zeitpunkte lediglich ein Anzeigesignal aufgenommen und zum Ersatz des zum vorgegebenen Zeitpunkt aufgenommenen Anzeigesignals herangezogen wird. Dabei wird insbesondere das zum Zeitpunkt des ersten der Klicks vorliegende Anzeigesignal herangezogen und an die Stelle des zum vorgegebenen Zeitpunkt aufgenommenen Anzeigesignals geschrieben. Hierdurch wird erreicht, dass Doppelklicks wirksam erkannt und protokolliert werden können.

Ein besonderer Aspekt der Erfindung sieht ein Verfahren vor, bei dem bei Vorliegen einer Anzahl von zumindest zwei Klicks zwischen zwei unmittelbar aufeinanderfolgenden Zeitpunkten der periodisch wiederkehrenden Zeitpunkte zum Zeitpunkt jedes der Klicks das jeweils vorliegende Anzeigesignal aufgenommen wird. Die jeweils vorangehenden abgespeicherten Anzeigesignale oder die nachfolgenden abzuspeichernden Anzeigesignale werden verworfen und durch die zu den Zeitpunkten der Klicks ermittelten Anzeigesignale ersetzt.

Ferner sieht ein Aspekt der Erfindung vor, dass jedes Anzeigesignal jeweils einen darzustellenden Bildschirminhalt umfasst. Dies ermöglicht eine vollständige Darstellung der für die überwachte Person sichtbaren Bildschirminhalte.

Erfindungsgemäß ist weiters eine Vorrichtung zur Aufzeichnung der Benutzerinteraktion mit einem Computersystem, mit einer Zeigeeinheit und einer Anzeigeeinheit vorgesehen, bei der das Computersystem eine Aufzeichnungseinheit mit einem Speicher umfasst. Dem Speicher sind die vom Computersystem erzeugten und der Anzeigeeinheit zugeführten Anzeigesignale zugeführt, wobei in der Aufzeichnungseinheit die ihr zugeführten Signale zu wiederkehrenden Zeitpunkten im Speicher abspeicherbar sind. Erfindungsgemäß ist vorgesehen, dass der Aufzeichnungseinheit die beim Computersystem eingehenden Zeigesignale der Zeigeeinheit zugeführt sind. Mit der Aufnahmeeinheit ist bei Vorliegen eines Klicks das momentan an der Anzeigeeinheit vorliegende Anzeigesignal aufnehmbar. Weiters ist das unmittelbar vor oder nach dem Klick aufgenommene Anzeigesignal durch das momentan an der Anzeigeeinheit vorliegende Anzeigesignal ersetzbar bzw. überschreibbar.

Diese Vorrichtung bietet den Vorteil, dass einerseits die Benutzerinteraktion besser erfasst werden kann und andererseits weniger Speicherplatz zur Aufzeichnung im Vergleich zu konventionellen Methoden erforderlich ist. Die erfindungsgemäße Vorrichtung ist einfach zu realisieren. Gängige Video-Codecs, die lediglich eine konstante Bildrate verarbeiten können, können von der erfindungsgemäßen Vorrichtung verwendet werden bzw. die mit der erfindungsgemäßen Vorrichtung erzeugten Bilddaten weiterverarbeiten.

Ein vorteilhafter Aspekt der Erfindung betrifft eine Vorrichtung, bei der mit der Aufzeichnungseinheit bei Vorliegen von zumindest zwei Klicks zwischen zwei unmittelbar aufeinanderfolgenden Zeitpunkten der periodisch wiederkehrenden Zeitpunkte lediglich ein Anzeigesignal aufnehmbar ist.

Hierdurch wird erreicht, dass Doppelklicks wirksam erkannt und protokolliert werden können.

Ein weiterer vorteilhafter Aspekt der Erfindung betrifft eine Vorrichtung bei der mit der Aufzeichnungseinheit bei Vorliegen eines Klicks das momentan an der Anzeigeeinheit vorliegende Anzeigesignal aufnehmbar ist. Mit der Aufzeichnungseinheit ist das dem Klick zeitlich nächstliegende aufgenommene oder aufzunehmende Anzeigesignal durch das momentan an der Anzeigeeinheit vorliegende Anzeigesignal ersetzbar bzw. überschreibbar.

Hierdurch wird erreicht, dass eine regelmäßige Aufnahme der Bilder in möglichst gleichen Aufnahmeintervallen erzielt wird.

Ein weiterer bevorzugter Aspekt der Erfindung betrifft eine Vorrichtung, bei der mit der Aufzeichnungseinheit bei Vorliegen einer Anzahl von zumindest zwei Klicks zwischen zwei unmittelbar aufeinanderfolgenden Zeitpunkten der wiederkehrenden Zeitpunkte zum Zeitpunkt jedes der Klicks das jeweils vorliegende Anzeigesignal aufnehmbar ist. Mit der Aufzeichnungseinheit sind die jeweils vorangehenden abgespeicherten Anzeigesignale oder die nachfolgenden abzuspeichernden Anzeigesignale durch die zu den Zeitpunkten der Klicks ermittelten Anzeigesignale ersetzbar bzw. überschreibbar.

Hierdurch wird erreicht, dass die Aufzeichnungsintervalle erweitert werden können und zwischen zwei Aufnahmezeitpunkten erfolgte Klicks aufgezeichnet werden und die erzielten Aufnahmeintervalle gleichmäßig sind.

Bei einer besonderen Weiterbildung der erfindungsgemäßen Vorrichtung ist vorgesehen, dass die Zeigeeinheit eine Computermaus, ein Trackball, ein Touchpad oder ein elektronisches Zeichenbrett ist und/oder dass die Anzeigeeinheit ein Bildschirm oder ein Bildprojektionssystem ist.

Dies ermöglicht einen weiten Einsatz der Erfindung für unterschiedliche Eingabe- und Ausgabegeräte.

Die Erfindung wird im Folgenden anhand von Ausführungsbeispielen nicht einschränkend dargestellt.
Fig. 1 zeigt schematisch eine erfindungsgemäße Vorrichtung.
Fig. 2 zeigt den Ablauf des erfindungsgemäßen Verfahrens bei Auftreten eines Klicks.
Fig. 3 zeigt den Ablauf des erfindungsgemäßen Verfahrens bei der Aufzeichnung von zwei Klicks innerhalb eines kurzen Zeitbereichs.

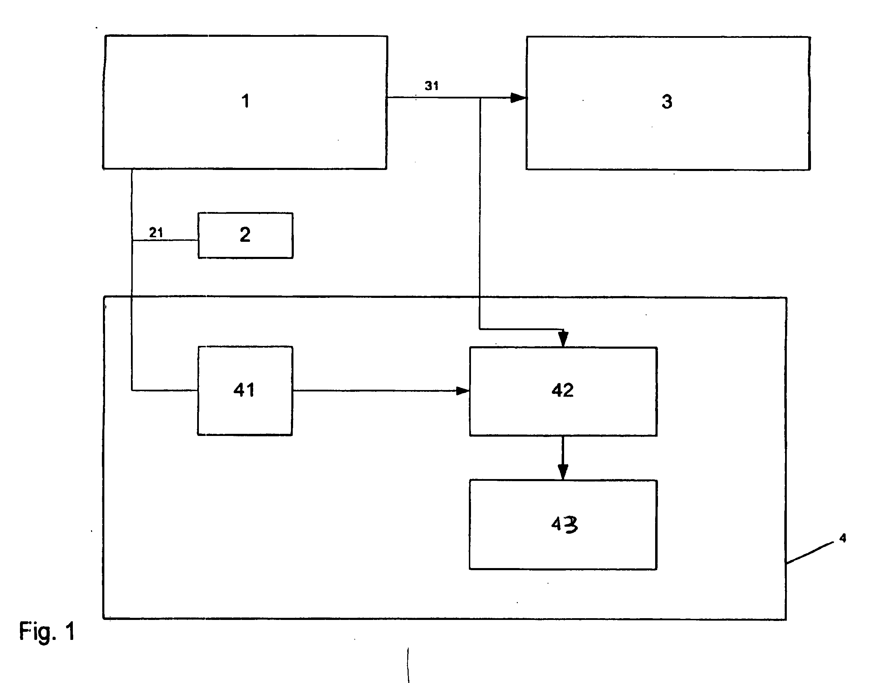

Die in Fig. 1 schematisch dargestellte erfindungsgemäße Vorrichtung umfasst ein Computersystem 1 mit einer Maus 2 sowie mit einer Anzeigeeinheit 3. Ferner umfasst die erfindungsgemäße Vorrichtung eine Aufzeichnungseinheit 4. Dem Computersystem 1 sind die Signale der Maus 2 zugeführt. Die Anzeigeeinheit 3 ist dem Computersystem 1 nachgeschaltet. Die Zeigesignale 21 der Maus 2 werden an das Computersystem 1 weitergeleitet. Die Anzeigesignale 31 werden vom Computersystem 1 an die Anzeigeeinheit 3 weitergeleitet.

Die Zeigesignale 21 sowie die Anzeigesignale 31 werden weiters einer Aufzeichnungseinheit 4 zugeführt. Die Zeigesignale 21 sind dabei einem von der Aufzeichnungseinheit 4 umfassten Analysator 41 zugeführt, der das Zeigesignal 21 überwacht und bei Betätigung der Zeigeeinheit 2 durch einen Klick ein Signal erzeugt. Das Anzeigesignal 31 ist einer von der Aufzeichnungseinheit 4 umfassten Steuereinheit 42 zugeführt. Die Steuereinheit 42 nimmt die Anzeigesignale zu vorgegebenen, insbesondere periodisch wiederkehrenden Zeitpunkten auf und speichert diese in einen ihr nachgeschalteten Speicher 43 ab. Weiters kann vorgesehen werden, dass die Steuereinheit 42 auch das jeweilige am Eingang der Aufzeichnungseinheit 4 anliegende Zeigesignal 21 aufnimmt und gemeinsam mit dem zeitgleich ermittelten Anzeigesignal in den Speicher 43 schreibt. Dabei werden pro Sekunde etwa 2 bis 10 Anzeigesignale aufgenommen. Als Zeigeeinheit wird im vorliegenden Fall eine Computermaus verwendet. Analog dazu kann auch ein Touchpad, ein Zeichenbrett oder ein Trackball verwendet werden. Als Anzeigeeinheit ist ein Bildschirm vorgesehen. Art und Bauform des Bildschirms sind für die Verwendung im Rahmen der Erfindung unerheblich.

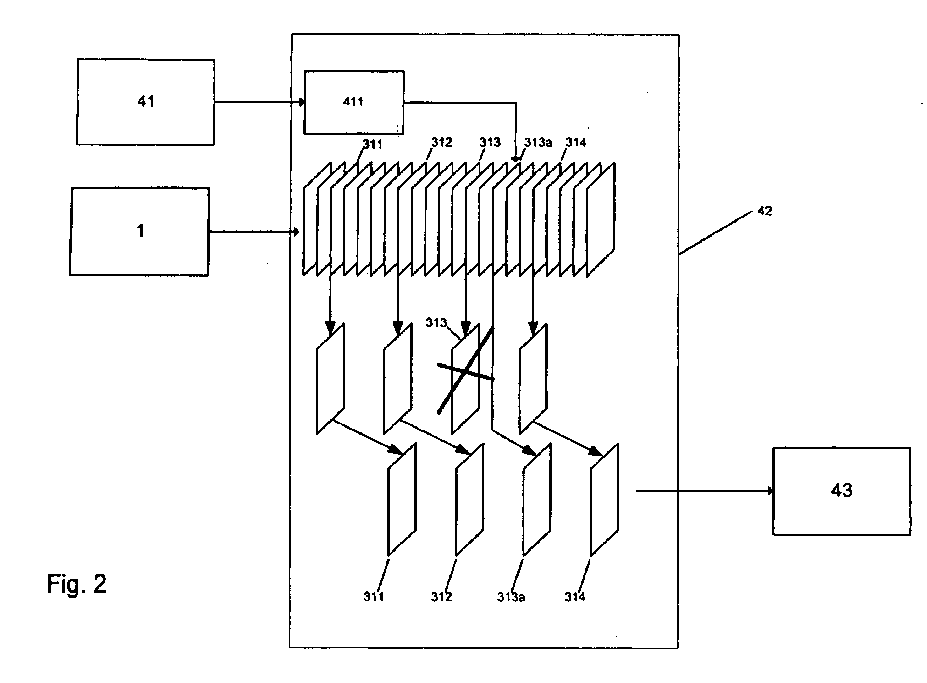

Vom Computersystem 1 werden, wie bereits erwähnt, Anzeigesignal 31 an die Anzeigeeinheit 3 übermittelt. Dieser Vorgang erfolgt fortlaufend, wobei die Anzeigeeinheit als Bildschirm ausgestaltet ist und an diesen etwa 20 bis 100 Bilder pro Sekunde übermittelt werden. Im vorliegenden Ausführungsbeispiel umfasst jedes vom Computersystem 1 an die Anzeigeeinheit 3 übermittelte Anzeigesignal 31 jeweils ein zu einem vorgegebenen Zeitpunkt an der Anzeigeeinheit 3 darzustellendes Bild. Die einzelnen Anzeigesignale 31 werden der Bildererzeugungseinheit 42 zugeführt, die, wie in Fig. 2 dargestellt, in wiederkehrenden Abständen ein einlangendes Anzeigesignal auswählt. In Fig. 2 ist dieser Vorgang für die Auswahl jedes fünften Anzeigesignals dargestellt. Dabei werden, wie in Fig. 2 dargestellt, die Anzeigesignale 311 und 312 aus den einlangenden Anzeigesignalen 31 entnommen und dem Speicher 43 zugeführt. Prinzipiell gleich erfolgt auch die Auswahl des Anzeigesignals 313 aus den einlangenden Anzeigesignalen 31. Kurze Zeit nach dem Vorliegen dieses Signals wird jedoch ein Klick der Zeigeeinheit vom Analysator 41 detektiert und an die Steuereinheit 42 weitergeleitet. Da durch die Aufzeichnung der Bildanzeigesignale und auch durch die Verarbeitung der Zeigesignale im Computersystem eine geringfügige Zeitverzögerung entsteht, kann vorgesehen werden, dass die einlangenden Klicks um die jeweilige Zeitverzögerung verzögert und somit wieder synchronisiert werden.

Liegt zwischen zwei ausgewählten Anzeigesignalen 313, 314 ein Klick vor, wird dasjenige Anzeigesignal 313a ausgewählt, das zeitgleich bzw. synchron mit dem Klick vorliegt. Das ursprünglich ausgewählte Signal 313 wird im folgenden Beispiel durch das Signal 313a ersetzt. Bei der Abspeicherung der einzelnen Anzeigesignale wird dabei das unmittelbar vor dem Klick aufgenommene Anzeigesignal verworfen.

Alternativ dazu kann vorgesehen werden, dass das dem Klick unmittelbar nachfolgende Anzeigesignal 314 verworfen und ersetzt wird.

Eine weitere bevorzugte Ausführungsform der Erfindung sieht vor, dass dasjenige Anzeigesignal verworfen und durch das zum Zeitpunkt des Klicks vorliegende Anzeigesignal 313 ersetzt wird, das dem Zeitpunkt des Klicks am nächsten liegt.

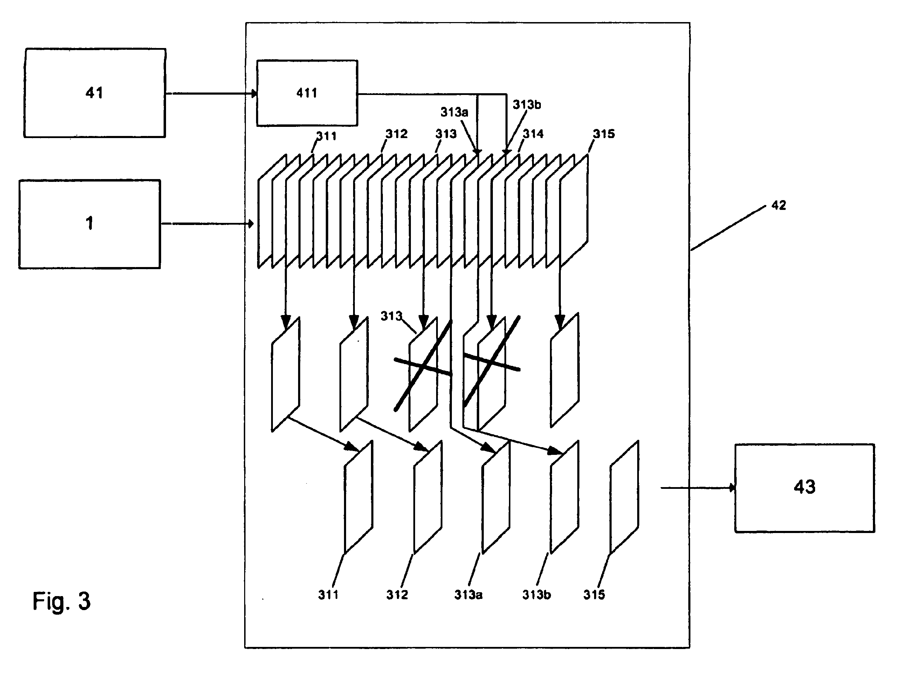

Im Folgenden wird eine Erweiterung der Erfindung beschrieben, die die Verarbeitung von Mehrfachklicks, insbesondere eines Doppelklicks, betrifft. Ein derartiges Vorgehen ist in der Fig. 3 dargestellt. Zwischen den Aufnahmezeitpunkten der periodisch aufgezeichneten Anzeigesignale 313, 314 wird vom Benutzer des Computersystems ein Doppelklick ausgelöst. Ein Doppelklick besteht aus zwei kurzen in rascher zeitlicher Abfolge getätigten Klicks, die im vorliegenden Fall zwischen den beiden periodisch aufgenommenen Anzeigesignalen 313, 314 liegen. Für jeden der beiden Klicks wird jeweils ein Anzeigesignal 313a, 313b ermittelt, das zu dem Zeitpunkt einer Anzeigeeinheit zugeführt war, zu dem der Klick vom Benutzer ausgeführt worden ist. Im vorliegenden Fall wird das vorangehende abgespeicherte Anzeigesignal 313 durch das mit dem ersten Klick zeitgleich vorliegende Anzeigesignal 313a ersetzt und verworfen. Das dem Doppelklick nachfolgende abzuspeichernde Anzeigesignal 314 wird durch das zeitgleich mit dem zweiten Klick vorliegende Anzeigesignal 313b ersetzt und anschließend verworfen.

Eine alternative Ausführungsform sieht vor, dass bei sehr kurzen Zeitabständen der Aufeinanderfolge von zwei Klicks, insbesondere dann, wenn die beiden Klicks zwischen der Aufnahme von zwei periodisch aufzunehmenden Anzeigesignalen liegen, lediglich als ein Klick angesehen werden und ein Verfahren, wie in Fig. 2 dargestellt, durchgeführt wird. Ein Doppelklick wird somit wie ein einfacher Klick behandelt, gegebenenfalls kann der Umstand, dass ein Doppelklick vorliegt, zusätzlich erkannt und in einem Speicher abgelegt werden.

Erfindungsgemäß ist weiter vorgesehen, dass die ausgewählten Anzeigesignale in einem Speicher 43 abgespeichert und zur weiteren Verarbeitung bzw. Rekonstruktion eines Bildverlaufs zur Verfügung gehalten werden.

## Patentansprüche

1. Verfahren zur Aufzeichnung der Interaktion eines Benutzers mit einem Computersystem (1) mit einer Zeigeeinheit (2) und einer Anzeigeeinheit (3), wobei die beim Computersystem (1) eingehenden Zeigesignale (21) der Zeigeeinheit (2) sowie die vom Computersystem (1) erzeugten und der Anzeigeeinheit (3) zugeführten Anzeigesignale (31) gespeichert werden, und wobei die Zeigesignale (21) und die Anzeigesignale (31) zu vorgegebenen, insbesondere periodisch, wiederkehrenden Zeitpunkten aufgenommen und abgespeichert werden,
**dadurch gekennzeichnet, dass** bei Vorliegen eines Klicks, dies ist eine Aktion des Benutzers an oder mit der Zeigeeinheit (2), welche eine Aktion beim angeschlossenen Gerät auslöst, das momentan an der Anzeigeeinheit (3) anliegende Anzeigesignal (31) aufgenommen wird und das unmittelbar vor dem Klick aufgenommene oder das unmittelbar nach dem Klick aufzunehmende Anzeigesignal (31) verworfen wird und durch das momentan an der Anzeigeeinheit (3) vorliegende Anzeigesignal (31) ersetzt wird.

2. Verfahren zur Aufzeichnung der Interaktion eines Benutzers mit einem Computersystem (1) mit einer Zeigeeinheit (2) und einer Anzeigeeinheit (3), wobei die beim Computersystem (1) eingehenden Zeigesignale (21) der Zeigeeinheit (2) sowie die vom Computersystem (1) erzeugten und der Anzeigeeinheit (3) zugeführten Anzeigesignale (31) gespeichert werden, und wobei die Zeigesignale (21) und die Anzeigesignale (31) zu vorgegebenen, insbesondere periodisch, wiederkehrenden Zeitpunkten aufgenommen und abgespeichert werden,
**dadurch gekennzeichnet, dass** bei Vorliegen eines Klicks, dies ist eine Aktion des Benutzers an oder mit der Zeigeeinheit (2), welche eine Aktion beim angeschlossenen Gerät auslöst, das momentan an der Anzeigeeinheit (3) anliegende Anzeigesignal (31) aufgenommen wird und das dem Zeitpunkt des Klicks zeitlich nächstliegende aufgenommene oder aufzunehmende Anzeigesignal (31) verworfen wird und durch das momentan an der Anzeigeeinheit (3) vorliegende Anzeigesignal (31) ersetzt wird.

3. Verfahren zur Aufzeichnung der Interaktion eines Benutzers mit einem Computersystem (1) mit einer Zeigeeinheit (2) und einer Anzeigeeinheit (3), wobei die beim Computersystem (1) eingehenden Zeigesignale (21) der Zeigeeinheit (2) sowie die vom Computersystem (1) erzeugten und der Anzeigeeinheit (3) zugeführten Anzeigesignale (31) gespeichert werden, und wobei die Zeigesignale (21) und die Anzeigesignale (31) zu vorgegebenen, insbesondere periodisch, wiederkehrenden Zeitpunkten aufgenommen und abgespeichert werden, **dadurch gekennzeichnet, dass** bei Vorliegen einer Anzahl von zumindest zwei Klicks, dies sind Aktionen des Benutzers an oder mit der Zeigeeinheit (2), welche eine Aktion beim angeschlossenen Gerät auslösen, zwischen zwei unmittelbar aufeinanderfolgenden Zeitpunkten, der insbesondere periodisch wiederkehrenden Zeitpunkte, lediglich das Anzeigesignal (31), das zum Zeitpunkt eines der Klicks, insbesondere des ersten der Klicks, vorliegt, aufgenommen und zum Ersatz des unmittelbar vor diesem Klick aufgenommenen oder des unmittelbar nach diesem Klick aufzunehmenden Anzeigesignals (31) herangezogen wird.

4. Verfahren zur Aufzeichnung der Interaktion eines Benutzers mit einem Computersystem (1) mit einer Zeigeeinheit (2) und einer Anzeigeeinheit (3), wobei die beim Computersystem (1) eingehenden Zeigesignale (21) der Zeigeeinheit (2) sowie die vom Computersystem (1) erzeugten und der Anzeigeeinheit (3) zugeführten Anzeigesignale (31) gespeichert werden, und wobei die Zeigesignale (21) und die Anzeigesignale (31) zu vorgegebenen, insbesondere periodisch, wiederkehrenden Zeitpunkten aufgenommen und abgespeichert werden, **dadurch gekennzeichnet, dass** bei Vorliegen einer Anzahl von zumindest zwei Klicks, dies sind Aktionen des Benutzers an oder mit der Zeigeeinheit (2), welche eine Aktion beim angeschlossenen Gerät auslösen, zwischen zwei unmittelbar aufeinanderfolgenden Zeitpunkten, der insbesondere periodisch wiederkehrenden Zeitpunkte, zum Zeitpunkt jedes der Klicks das jeweils vorliegende Anzeigesignal (31) aufgenommen wird und das jeweils vorangehende abgespeicherte Anzeigesignal (31) und das jeweils nachfolgende abzuspeichernde Anzeigesignal (31) verworfen und durch die zu den Zeitpunkten der Klicks ermittelten Anzeigesignale (31) ersetzt werden.

5. Verfahren gemäß einem der vorangehenden Ansprüche, **dadurch gekennzeichnet, dass** jedes Anzeigesignal jeweils einen darzustellenden Bildschirminhalt umfasst.

6. Vorrichtung zur Aufzeichnung der Benutzerinteraktion mit einem Computersystem (1), mit einer Zeigeeinheit (2) und einer Anzeigeeinheit (3),
- wobei das Computersystem (1) eine Aufzeichnungseinheit (4) mit einem Speicher (43) umfasst, der die vom Computersystem (1) erzeugten und der Anzeigeeinheit (3) zugeführten Anzeigesignale (31) zugeführt sind,
- wobei die Aufzeichnungseinheit (4) die ihr zugeführten Signale zu, insbesondere periodisch, wiederkehrenden Zeitpunkten im Speicher (43) abspeichert,
**dadurch gekennzeichnet,**
- **dass** der Aufzeichnungseinheit (4) die beim Computersystem (1) eingehenden Zeigesignale (21) der Zeigeeinheit (2) zugeführt sind, und
- **dass** die Aufnahmeeinheit (4) bei Vorliegen eines Klicks, dies ist eine Aktion des Benutzers an oder mit der Zeigeeinheit (2), welche eine Aktion beim angeschlossenen Gerät auslöst, das momentan an der Anzeigeeinheit (3) vorliegende Anzeigesignal (31) aufnimmt und
- **dass** die Aufzeichnungseinheit (4) das unmittelbar vor dem Klick aufgenommene oder das unmittelbar nach dem Klick aufzunehmende Anzeigesignal (31) durch das momentan an der Anzeigeeinheit (3) vorliegende Anzeigesignal im Speicher (43) ersetzt bzw. überschreibt.

7. Vorrichtung zur Aufzeichnung der Benutzerinteraktion mit einem Computersystem (1), mit einer Zeigeeinheit (2) und einer Anzeigeeinheit (3),
- wobei das Computersystem (1) eine Aufzeichnungseinheit (4) mit einem Speicher (43) umfasst, der die vom Computersystem (1) erzeugten und der Anzeigeeinheit (3) zugeführten Anzeigesignale (31) zugeführt sind,
- wobei die Aufzeichnungseinheit (4) die ihr zugeführten Signale zu, insbesondere periodisch, wiederkehrenden Zeitpunkten im Speicher (43) abspeichert,
**dadurch gekennzeichnet,**
- **dass** der Aufzeichnungseinheit (4) die beim Computersystem (1) eingehenden Zeigesignale (21) der Zeigeeinheit (2) zugeführt sind,
- **dass** die Aufzeichnungseinheit (4) bei Vorliegen einer Anzahl von zumindest zwei Klicks, dies sind Aktionen des Benutzers an oder mit der Zeigeeinheit (2), welche eine Aktion beim angeschlossenen Gerät auslösen, zwischen zwei unmittelbar aufeinanderfolgenden Zeitpunkten, insbesondere der periodisch wiederkehrenden Zeitpunkte, lediglich das Anzeigesignal (31) zum Zeitpunkt eines der Klicks, insbesondere des ersten der Klicks, aufnimmt, und
- **dass** die Aufzeichnungseinheit (4) das unmittelbar vor dem Klick aufgenommene oder das unmittelbar nach dem Klick aufzunehmende Anzeigesignal (31) dadurch ersetzt.

8. Vorrichtung zur Aufzeichnung der Benutzerinteraktion mit einem Computersystem (1), mit einer Zeigeeinheit (2) und einer Anzeigeeinheit (3),
- wobei das Computersystem (1) eine Aufzeichnungseinheit (4) mit einem Speicher (43) umfasst, der die vom Computersystem (1) erzeugten und der Anzeigeeinheit (3) zugeführten Anzeigesignale (31) zugeführt sind,
- wobei die Aufzeichnungseinheit (4) die ihr zugeführten Signale zu, insbesondere periodisch, wiederkehrenden Zeitpunkten im Speicher (43) abspeichert,
**dadurch gekennzeichnet,**
- **dass** der Aufzeichnungseinheit (4) die beim Computersystem (1) eingehenden Zeigesignale (21) der Zeigeeinheit (2) zugeführt sind, und
- **dass** die Aufnahmeeinheit (4) bei Vorliegen eines Klicks, dies ist eine Aktion des Benutzers an oder mit der Zeigeeinheit (2), welche eine Aktion beim angeschlossenen Gerät auslöst, das momentan an der Anzeigeeinheit (3) vorliegende Anzeigesignal (31) aufnimmt, und
- **dass** die Aufzeichnungseinheit (4) das dem Klick zeitlich nächstliegende aufgenommene oder aufzunehmende Anzeigesignal (31) durch das momentan an der Anzeigeeinheit (3) vorliegende Anzeigesignal (31) ersetzt bzw. überschreibt.

9. Vorrichtung zur Aufzeichnung der Benutzerinteraktion mit einem Computersystem (1), mit einer Zeigeeinheit (2) und einer Anzeigeeinheit (3),
- wobei das Computersystem (1) eine Aufzeichnungseinheit (4) mit einem Speicher (43) umfasst, der die vom Computersystem (1) erzeugten und der Anzeigeeinheit (3) zugeführten Anzeigesignale (31) zugeführt sind,
- wobei die Aufzeichnungseinheit (4) die ihr zugeführten Signale zu, insbesondere periodisch, wiederkehrenden Zeitpunkten im Speicher (43) abspeichert,
**dadurch gekennzeichnet,**
- **dass** der Aufzeichnungseinheit (4) die beim Computersystem (1) eingehenden Zeigesignale (21) der Zeigeeinheit (2) zugeführt sind, und
- **dass** die Aufzeichnungseinheit (4) bei Vorliegen einer Anzahl von zumindest zwei Klicks, dies sind Aktionen des Benutzers an oder mit der Zeigeeinheit (2), welche eine Aktion beim angeschlossenen Gerät auslösen, zwischen zwei unmittelbar aufeinanderfolgenden Zeitpunkten der, insbesondere periodisch, wiederkehrenden Zeitpunkte zum Zeitpunkt jedes der Klicks das jeweils vorliegende Anzeigesignal (31) aufnimmt und das jeweils vorangehende abgespeicherte Anzeigesignal (31) und das nachfolgende abzuspeichernde Anzeigesignal (31) durch die zu den Zeitpunkten der Klicks ermittelten Anzeigesignale (31) ersetzt bzw. überschreibt.

10. Vorrichtung gemäß einem der Ansprüche 6 bis 9, dass die Zeigeeinheit (2) eine Computermaus, ein Trackball, ein Touchpad oder ein elektronisches Zeichenbrett ist und/oder dass die Anzeigeeinheit (3) ein Bildschirm oder ein Bildprojektionssystem ist.

11. Datenträger auf dem ein Programm zur Durchführung eines Verfahrens gemäß einem der Ansprüche 1 bis 5 abgespeichert ist.

12. Computerprogramm mit Programmcode-Mitteln eingerichtet zur Durchführung eines Verfahrens nach einem der Ansprüche 1 bis 5, wenn das Programm auf einem Computer ausgeführt wird.

## Claims

1. A method for recording the interaction of a user with a computer system (1) having a pointing device (2) and a display unit (3), wherein the incoming pointing signals (21) of the pointing device (2) in the computer system (1) as well as the display signals (31) generated by the computer system (1) and fed to the display unit (3) are stored, and wherein the pointing signals (21) and the display signals (31) are recorded and saved at predetermined, in particular, recurring points in time, **characterized in that** in the case of a click, this is an action of the user on or with the pointing device (2), which triggers an action in the connected device, the display signal (31) currently on the display unit (3) is recorded and the display signal (31) recorded immediately before the click or to be recorded immediately after the click is discarded and is replaced with the display signal (31) currently available in the display unit (3).

2. A method for recording the interaction of a user with a computer system (1) having a pointing device (2) and a display unit (3), wherein the incoming pointing signals (21) of the pointing device (3) in the computer system (1) as well as the display signals (31) generated by the computer system (1) and fed to the display unit (3) are stored, and wherein the pointing signals (21) and the display signals (31) are recorded and saved at predetermined, in particular, recurring points in time, **characterized in that** in the case of a click, this is an action of the user on or with the pointing device (2), which triggers an action in the connected device, the display signal (31) currently on the display unit (3) is recorded and the chronologically next display signal (31) recorded or to be recorded at the time of the click is discarded and is replaced with the display signal (31) currently available in the display unit (3).

3. A method for recording the interaction of a user with a computer system (1) having a pointing device (2) and a display unit (3), wherein the incoming pointing signals (21) of the pointing device (2) in the computer system (1) as well as the display signals (31) generated by the computer system (1) and fed to the display unit (3) are stored, and wherein the pointing signals (21) and the display signals (31) are recorded and saved at predetermined, in particular, at recurring points in time, **characterized in that** in the case of a number of at least two clicks, these are actions of the user on or with the pointing device (2), which trigger an action in the connected device, between two immediately successive points in time, particularly recurring points in time, only the display signal (31), which exists at the time of one of the clicks, in particular, the first of the clicks, is recorded and is used to replace the display signal (31) recorded immediately before this click or to be recorded immediately after this click.

4. A method for recording the interaction of a user with a computer system (1) having a pointing device (2) and a display unit (3), wherein the incoming pointing signals (21) of the pointing device (2) in the computer system (1) as well as the display signals (31) generated by the computer system (1) and fed to the display unit (3) are stored, and wherein the pointing signals (21) and the display signals (31) are recorded and saved at predetermined, in particular, recurring points in time, **characterized in that** in the case of a number of at least two clicks, these are actions of the user on or with the pointing device (2), which trigger an action in the connected device, between two immediately successive points in time, particularly recurring points in time, at the point in time of each click the pointing signal (31) existing in each case is recorded and each previously saved pointing signal (31) and each pointing signal subsequently to be saved are discarded and are replaced with the pointing signals (31) ascertained at the point in time of the clicks.

5. A method according to one of the preceding claims, **characterized in that** each pointing signal comprises in each case a screen content to be depicted.

6. A device for recording the user interaction with a computer system (1), having a pointing device (2) and display unit (3),
- wherein the computer system (1) comprises a recording unit (4) with a memory (43), to which the display signals (31) generated by the computer system (1) and fed to the display unit (3) are fed,
- wherein the recording unit (4) saves the signals fed to it in the memory (43), at, in particular, recurring points of time,
**characterized in**
- **that** the pointing signals (21) of the pointing device (2) incoming in the computer system (1) are fed to the recording unit (4), and
- **that** the acquisition unit (4) in the case of a click, this is an action of the user on or with the pointing device (2), which triggers an action in the connected device, records the display signal (31) currently available in the display unit (3) and
- **that** the recording unit (4) replaces or overwrites the display signal (31) in the memory (43) recorded immediately before the click or to be recorded immediately after the click with the display signal currently available in the display unit (3).

7. A device for recording the user interaction with a computer system (1), having a pointing device (2) and display unit (3),
- wherein the computer system (1) comprises a recording unit (4) with a memory (43), to which the display signals (31) generated by the computer system (1) and fed to the display unit (3) are fed,
- wherein the recording unit (4) saves the signals fed to it in the memory (43), at, in particular, recurring points of time,
**characterized in**
- **that** the pointing signals (21) of the pointing device (2) incoming in the computer system (1) are fed to the recording unit (4),
- **that** the recording unit (4) in the case of a number of at least two clicks, these are actions of the user on or with the pointing device (2), which trigger an action in the connected device, between two immediately successive points in time, particularly recurring points in time, records only the display signal (31), at the time of one of the clicks, in particular, the first of the clicks, and
- **that** the recording unit (4) thus replaces the display signal (31) recorded before the click or to be recorded immediately after the click.

8. A device for recording the user interaction with a computer system (1), having a pointing device (2) and display unit (3),
- wherein the computer system (1) comprises a recording unit (4) with a memory (43), to which the display signals (31) generated by the computer system (1) and fed to the display unit (3) are fed,
- wherein the recording unit (4) saves the signals fed to it in the memory (43), at, in particular, recurring points of time,
**characterized in**
- **that** the pointing signals (21) of the pointing device (2) incoming in the computer system (1) are fed to the recording unit (4), and
- **that** the acquisition unit (4) in the case of a click, this is an action of the user on or with the pointing device (2), which triggers an action in the connected device, records the display signal (31) currently available in the display unit (3) and
- **that** the recording unit (4) replaces or overwrites the display signal (31) recorded or to be recorded chronologically nearest to the click with the display signal (31) currently available in the display unit (3).

9. A device for recording the user interaction with a computer system (1), having a pointing device (2) and display unit (3),
- wherein the computer system (1) comprises a recording unit (4) with a memory (43), to which the display signals (31) generated by the computer system (1) and fed to the display unit (3) are fed,
- wherein the recording unit (4) saves the signals fed to it in the memory (43), at, in particular, recurring points of time,
**characterized in**
- **that** the pointing signals (21) of the pointing device (2) incoming in the computer system (1) are fed to the recording unit (4), and
- **that** the recording unit (4) in the case of a number of at least two clicks, these are actions of the user on or with the pointing device (2), which trigger an action in the connected device, between two immediately successive points in time of the, particularly recurring points in time, records each available the display signal (31), at the time of each click, and replaces or overwrites each previously saved display signal (31) and the following display signal (31) to be saved with the display signals (31) ascertained at the time of the click.

10. A device according to one of claims 6 to 9, that the pointing device (2) is a computer mouse, a trackball, a touch pad or an electronic drawing board and/or that the display unit (3) is a screen or an image projection system.

11. The data carrier on which a program is saved for implementing a method according to one of claims 1 to 5.

12. A computer program equipped with program code means for implementing a method according to one of claims 1 to 5, if the program is executed on a computer.

## Revendications

1. Procédé d'enregistrement de l'interaction d'un utilisateur avec un système informatique (1), avec une unité de pointage (2) et une unité d'affichage (3), les signaux de pointage (21) de l'unité de pointage (2) entrant dans le système informatique (1) ainsi que les signaux d'affichage (31) générés par le système informatique (1) et entrés dans l'unité d'affichage (3) étant stockés et les signaux de pointage (21) et les signaux d'affichage (31) étant enregistrés et stockés à des moments prédéterminés, de préférence périodiques,
**caractérisé en ce que**, en présence d'un clic, c'est une action de l'utilisateur au niveau ou avec l'unité de pointage (2) qui déclenche une action dans l'appareil connecté, le signal d'affichage (31) appliqué momentanément au niveau de l'unité d'affichage (3) est enregistré et le signal d'affichage (31) enregistré avant le clic ou à enregistrer immédiatement après le clic est rejeté et remplacé par le signal d'affichage (31) présent momentanément au niveau de l'unité d'affichage (3).

2. Procédé d'enregistrement de l'interaction d'un utilisateur avec un système informatique (1), avec une unité de pointage (2) et une unité d'affichage (3), les signaux de pointage (21) de l'unité de pointage (2) entrant dans le système informatique (1) ainsi que les signaux d'affichage (31) générés par le système informatique (1) et entrés dans l'unité d'affichage (3) étant stockés et les signaux de pointage (21) et les signaux d'affichage (31) étant enregistrés et stockés à des moments prédéterminés, de préférence périodiques,
**caractérisé en ce que**, en présence d'un clic, c'est une action de l'utilisateur au niveau ou avec l'unité de pointage (2) qui déclenche une action dans l'appareil connecté, le signal d'affichage (31) appliqué momentanément au niveau de l'unité d'affichage (3) est enregistré et le signal d'affichage (31) enregistré ou à enregistrer au moment le plus proche du clic est rejeté et remplacé par le signal d'affichage (31) présent momentanément au niveau de l'unité d'affichage (3).

3. Procédé d'enregistrement de l'interaction d'un utilisateur avec un système informatique (1), avec une unité de pointage (2) et une unité d'affichage (3), les signaux de pointage (21) de l'unité de pointage (2) entrant dans le système informatique (1) ainsi que les signaux d'affichage (31) générés par le système informatique (1) et entrés dans l'unité d'affichage (3) étant stockés et les signaux de pointage (21) et les signaux d'affichage (31) étant enregistrés et stockés à des moments prédéterminés, de préférence périodiques, **caractérisé en ce que**, en présence d'au moins deux clics, ce sont des actions de l'utilisateur au niveau ou avec l'unité de pointage (2) qui déclenchent une action dans l'appareil connecté, seul le signal d'affichage (31) qui existe au moment d'un des clics, plus particulièrement du premier clic, est enregistré entre deux moments se succédant directement, plus particulièrement des moments périodiques, et utilisé pour le remplacement du signal d'affichage (31) enregistré immédiatement avant ce clic ou à enregistrer immédiatement après ce clic.

4. Procédé d'enregistrement de l'interaction d'un utilisateur avec un système informatique (1), avec une unité de pointage (2) et une unité d'affichage (3), les signaux de pointage (21) de l'unité de pointage (2) entrant dans le système informatique (1) ainsi que les signaux d'affichage (31) générés par le système informatique (1) et entrés dans l'unité d'affichage (3) étant stockés et les signaux de pointage (21) et les signaux d'affichage (31) étant enregistrés et stockés à des moments prédéterminés, de préférence périodiques, **caractérisé en ce que**, en présence d'au moins deux clics, ce sont des actions de l'utilisateur au niveau ou avec l'unité de pointage (2) qui déclenchent une action dans l'appareil connecté, le signal d'affichage (31) existant est enregistré entre deux moments se succédant directement, plus particulièrement des moments périodiques, au moment de chacun des clics, et le signal d'affichage (31) enregistré précédemment et le signal d'affichage (31) à enregistrer ensuite sont rejetés et remplacés par les signaux d'affichage (31) déterminés au moment des clics.

5. Procédé selon l'une des revendications précédentes, **caractérisé en ce que** chaque signal d'affichage comprend chacun un contenu d'écran à afficher.

6. Dispositif d'enregistrement de l'interaction d'un utilisateur avec un système informatique (1), avec une unité de pointage (2) et une unité d'affichage (3),
- le système informatique (1) comprenant une unité d'enregistrement (4) avec une mémoire (43), vers laquelle sont envoyés les signaux d'affichage (31) générés par le système informatique (1) et envoyés vers l'unité d'affichage (3),
- l'unité d'enregistrement (4) stockant les signaux qui lui sont envoyés à des moments, de préférence périodiques, dans la mémoire (43),
**caractérisé en ce que**
- les signaux de pointage (21) de l'unité de pointage (2) entrant dans le système informatique (1) sont envoyés vers l'unité d'enregistrement (4) et
- l'unité d'enregistrement (4), en présence d'un clic, c'est une action de l'utilisateur au niveau ou avec l'unité de pointage (2) qui déclenche une action dans l'appareil connecté, enregistre le signal d'affichage (31) présent momentanément au niveau de l'unité d'affichage (3) et
- l'unité d'enregistrement (4) remplace ou écrase, dans la mémoire (43), le signal d'affichage (31) à enregistrer immédiatement après le clic par le signal d'affichage présent momentanément au niveau de l'unité d'affichage (3).

7. Dispositif d'enregistrement de l'interaction d'un utilisateur avec un système informatique (1), avec une unité de pointage (2) et une unité d'affichage (3),
- le système informatique (1) comprenant une unité d'enregistrement (4) avec une mémoire (43), vers laquelle sont envoyés les signaux d'affichage (31) générés par le système informatique (1) et envoyés vers l'unité d'affichage (3),
- l'unité d'enregistrement (4) stockant les signaux qui lui sont envoyés à des moments, de préférence périodiques, dans la mémoire (43),
**caractérisé en ce que**
- les signaux de pointage (21) de l'unité de pointage (2) entrant dans le système informatique (1) sont envoyés vers l'unité d'enregistrement (4) et
- l'unité d'enregistrement (4), en présence d'au moins deux clics, ce sont des actions de l'utilisateur au niveau ou avec l'unité de pointage (2) qui déclenchent une action dans l'appareil connecté, enregistre uniquement le signal d'affichage (31) qui existe au moment d'un des clics, plus particulièrement du premier clic, est enregistré entre deux moments se succédant directement, plus particulièrement des moments périodiques et
- l'unité d'enregistrement (4) remplace le signal d'affichage (31) enregistré immédiatement avant le clic ou à enregistrer immédiatement après le clic.

8. Dispositif d'enregistrement de l'interaction d'un utilisateur avec un système informatique (1), avec une unité de pointage (2) et une unité d'affichage (3),
- le système informatique (1) comprenant une unité d'enregistrement (4) avec une mémoire (43), vers laquelle sont envoyés les signaux d'affichage (31) générés par le système informatique (1) et envoyés vers l'unité d'affichage (3),
- l'unité d'enregistrement (4) stockant les signaux qui lui sont envoyés, à des moments de préférence périodiques, dans la mémoire (43),
**caractérisé en ce que**
- les signaux de pointage (21) de l'unité de pointage (2) entrant dans le système informatique (1) sont envoyés vers l'unité d'enregistrement (4) et
- l'unité d'enregistrement (4), en présence d'un clic, c'est une action de l'utilisateur au niveau ou avec l'unité de pointage (2) qui déclenche une action dans l'appareil connecté, enregistre le signal d'affichage (31) existant momentanément au niveau du signal d'affichage (3) et
- l'unité d'enregistrement (4) remplace ou écrase le signal d'affichage (31) enregistré ou à enregistrer le plus proche du clic par le signal d'affichage (31) existant momentanément au niveau de l'unité d'affichage (3).

9. Dispositif d'enregistrement de l'interaction d'un utilisateur avec un système informatique (1), avec une unité de pointage (2) et une unité d'affichage (3),
- le système informatique (1) comprenant une unité d'enregistrement (4) avec une mémoire (43), vers laquelle sont envoyés les signaux d'affichage (31) générés par le système informatique (1) et envoyés vers l'unité d'affichage (3),
- l'unité d'enregistrement (4) stockant les signaux qui lui sont envoyés, à des moments de préférence périodiques, dans la mémoire (43),
**caractérisé en ce que**
- les signaux de pointage (21) de l'unité de pointage (2) entrant dans le système informatique (1) sont envoyés vers l'unité d'enregistrement (4) et
- l'unité d'enregistrement (4), en présence d'au moins deux clics, ce sont des actions de l'utilisateur au niveau ou avec l'unité de pointage (2) qui déclenchent une action dans l'appareil connecté, enregistre le signal d'affichage (31) existant entre deux moments se succédant directement, plus particulièrement des moments périodiques, au moment de chacun des clics et remplace ou écrase le signal d'affichage (31) enregistré précédemment et le signal d'affichage (31) à enregistrer ensuite par les signaux d'affichage **(31)** déterminés au moment des clics.

10. Dispositif selon l'une des revendications 6 à 9, **caractérisé en ce que** l'unité de pointage (2) est une souris d'ordinateur, une trackball, un pavé tactile ou une planche à dessin électronique et/ou **en ce que** l'unité d'affichage est un écran ou un système de projection d'images.

11. Support de données sur lequel un programme est enregistré pour la réalisation d'un procédé selon l'une des revendications 1 à 5.

12. Programme informatique configuré avec des moyens de programmation pour la réalisation d'un procédé selon l'une des revendications 1 à 5 lorsque le programme est exécuté sur un ordinateur.
